# FASCICULE DE BREVET EUROPEEN

(11) **EP 4 496 680 B1**
(45) Date de publication et mention de la délivrance du brevet: **29.04.2026**
(21) Numéro de dépôt: 23712172.8
(22) Date de dépôt: 09.03.2023
(51) Int. Cl.: B25J 3/02, B25J 9/04, B25J 9/10, B25J 19/00

(54) **DISPOSITIF DE MANIPULATION D'UNE CHARGE AVEC COMPENSATION DE GRAVITÉ**
VORRICHTUNG ZUR HANDHABUNG EINER LAST MIT SCHWERKRAFTAUSGLEICH
DEVICE FOR MANIPULATING A LOAD WITH GRAVITY COMPENSATION

(30) Priorité: 23.03.2022 FR 2202588
(43) Date de publication de la demande: 29.01.2025
(73) Titulaire: NANTES UNIVERSITÉ, 44035 Nantes Cedex 1 (FR)
(72) Inventeur: GARNIER, Sébastien, 44240 LA CHAPELLE SUR ERDRE (FR); SUBRIN, Kevin, 44150 ANCENIS SAINT GEREON (FR)
(74) Mandataire: Vidon Brevets & Stratégie
(86) Numéro de dépôt international: PCT/EP2023/056063
(87) Numéro de publication internationale: WO 2023/180088

(56) Documents cités:
- EP-A1- 3 587 040
- FR-A1- 2 375 011
- FR-A1- 2 688 436
- GB-A- 1 599 698
- US-A1- 2019 209 264

## Description

### Domaine technique

L'invention se rapporte aux dispositifs de manipulation, également appelés manipulateurs, permettant de faciliter la manipulation d'objets lourds au sein d'un espace de travail.

### Art antérieur

Dans de nombreux domaines d'activité, notamment dans le secteur industriel, il est fréquent d'avoir à manipuler des charges lourdes, i.e. de l'ordre de plusieurs kilogrammes à plusieurs dizaines voire centaines de kilogrammes.

Dans de telles situations, il peut être utile de recourir à un dispositif de manipulation afin de faciliter le déplacement et/ou le positionnement de la charge dans l'espace de travail. L'utilisation d'un dispositif de manipulation permet par exemple, en limitant les manipulations à mains nues de la charge, de prévenir certains risques pour la santé tels que les troubles musculo-squelettiques (TMS) ou le mal de dos. Par ailleurs, là où la présence de plusieurs personnes est souvent requise pour porter, déplacer et positionner une charge lourde à mains nues, une seule personne suffit généralement pour la mise en œuvre d'un dispositif de manipulation permettant d'aboutir au même résultat.

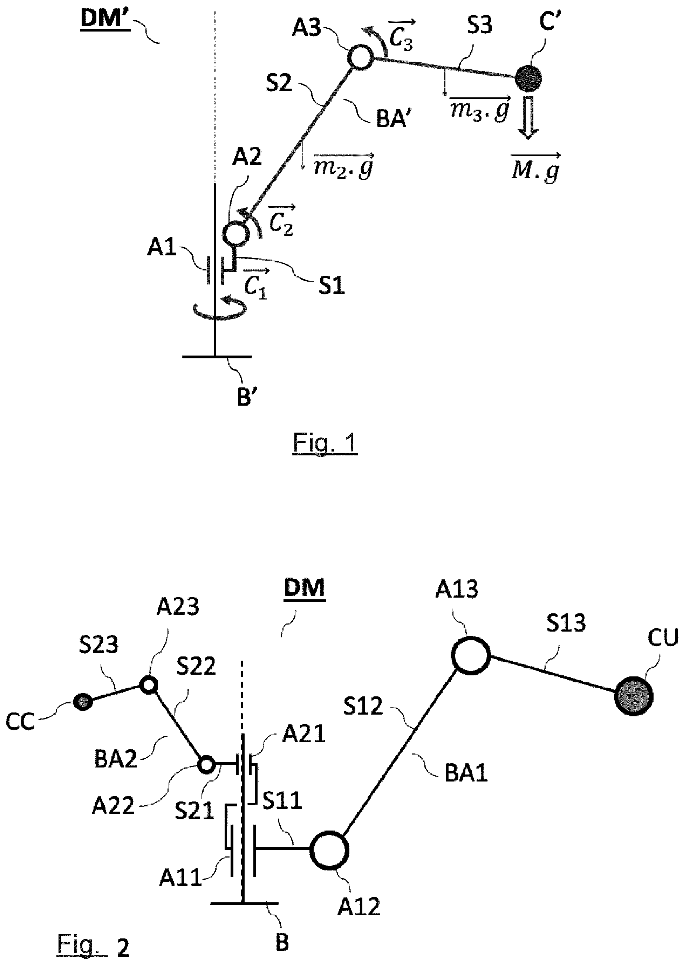

La **figure 1** présente, dans une vue schématique, un exemple d'un dispositif de manipulation de charge selon l'art antérieur, tel qu'on en trouve dans de nombreuses industries. Un tel dispositif de manipulation DM' comprend généralement un bras de manipulation articulé motorisé BA', relié par une de ses extrémités à une base B' autour de laquelle il peut pivoter, la base B' faisant office de support de fixation du dispositif de manipulation au bâti. Le bras articulé BA' est formé d'une succession de segments (au nombre de trois dans l'exemple de la figure 1, référencés S1, S2 et S3) reliés à la base B' ou entre eux par des articulations (par exemple des liaisons pivot, telles que les liaisons référencées A1, A2 et A3 dans l'exemple de la figure 1). La charge à manipuler C' est fixée à l'autre extrémité, libre, du bras articulé, au niveau d'un effecteur comprenant des moyens de fixation (non représentés sur la figure 1) dédiés à cette fin, par exemple des moyens de préhension de la charge C'.

Dans un tel dispositif de manipulation selon l'art antérieur, l'équilibre est réalisé grâce aux différents couples existants au niveau des articulations. Ainsi, à l'arrêt, le couple C₃ au niveau de l'articulation A3 s'oppose à la masse de l'ensemble formé par l'effecteur (comprenant la charge C' éventuellement fixée à cet effecteur) et le segment S3, et le couple C₂ au niveau de l'articulation A2 s'oppose à la masse de l'ensemble formé par l'effecteur (comprenant la charge C' éventuellement fixée à cet effecteur) et les segments S2 et S3. Le couple C₁ au niveau de l'articulation A1 n'intervient que lors d'un mouvement, mais la liaison pivot A1 doit cependant être dimensionnée pour maintenir le torseur T₁ lié au poids du bras articulé BA' et éviter le basculement.

Classiquement, dans ce type de robots industriels à structure dite « sérielle », des compensateurs de gravité (non représentés) sont également positionnés au niveau de la base B' du dispositif de manipulation, de manière à compenser au moins en partie la masse du bras articulé.

Les dispositifs de manipulation de charges existants décrits précédemment présentent cependant certains inconvénients.

En premier lieu, l'aide à la compensation de gravité est souvent hétérogène dans l'espace de travail. Plus particulièrement, les compensateurs de gravité positionnés à la base du dispositif de manipulation résolvent généralement seulement partiellement la compensation de masse du robot et rarement celle de la charge.

En second lieu, le fait que ces dispositifs de manipulation soient motorisés (i.e. contrôlés via un dispositif de contrôle de type joystick ou télécommande) prive l'utilisateur de toute perception physique du comportement de la charge en mouvement. Par exemple, l'utilisateur n'est plus en mesure d'appréhender, même de manière partielle, certaines grandeurs qui caractérisent la charge en mouvement, telle que sa masse ou son inertie, alors que ces informations sont pourtant utiles à son guidage précis dans l'espace de travail.

En troisième lieu, les dispositifs de manipulation existants sont souvent complexes et coûteux, notamment du fait de l'électronique qu'ils embarquent pour les motoriser et de la présence à leur base de moyens de compensation de gravité sophistiqués. Il en résulte qu'ils ne sont pas toujours adaptés pour être utilisés par certains corps de métiers ou dans certains environnements difficiles comme peuvent l'être ceux du secteur du bâtiment par exemple, où on recherche du matériel simple (à utiliser, à déplacer), fiable, utilisable facilement en extérieur comme en intérieur, y compris dans des milieux humides (e.g. sous la pluie) ou particulièrement poussiéreux, et à prix compétitif.

Le document FR2375011 présente un dispositif de manipulation de charge tel que défini dans le préambule de la revendication 1 de la présente demande.

Il existe donc un besoin pour un manipulateur de charge de conception simple et robuste qui ne présente pas les contraintes des dispositifs de manipulation existants.

### Résumé de l'invention

La présente technique permet de proposer une solution visant à remédier à certains inconvénients de l'art antérieur. La présente technique se rapporte en effet à un dispositif de manipulation d'une charge, comprenant un premier bras articulé s'étendant d'une base dudit dispositif jusqu'à une extrémité libre dudit premier bras articulé comprenant des moyens de fixation de ladite charge, ledit premier bras articulé étant formé d'une succession de segments reliés par des articulations. Selon le principe général de la présente technique, le dispositif comprend par ailleurs :
- un deuxième bras articulé formé d'une succession d'un même nombre de segments que ledit premier bras articulé, reliés entre eux par un même type d'articulations que celles dudit premier bras articulé, lesdits premier et deuxième bras articulés s'étendant de part et d'autre de ladite base, chaque segment dudit deuxième bras articulé étant de longueur plus courte et de masse plus importante qu'un segment de même position, dit segment associé, dudit premier bras articulé, lesdites longueur et masse étant dimensionnées pour que le produit masse-longueur soit sensiblement équivalent pour deux segments associés ;
- des moyens de transmission de mouvements entre segments associés, lesdits moyens de transmission étant configurés pour qu'un mouvement d'un segment d'un des deux bras articulés entraine un mouvement de même amplitude du segment associé de l'autre bras articulé.

Dans un mode de réalisation particulier, les segments dudit premier bras articulé et/ou dudit deuxième bras articulés présentent une structure en parallélogramme déformable.

Dans un mode de réalisation particulier, lesdits moyens de transmission appartiennent au groupe comprenant des moyens de transmission par engrenages, par courroies, et/ou par chaines.

Selon l'invention, lesdits moyens de transmission s'étendent au moins en partie au niveau de ladite base.

Selon l'invention, ladite base comprend des moyens de motorisation desdits moyens de transmission.

Dans un mode de réalisation particulier, ledit deuxième bras articulé comprend, à son extrémité libre, des moyens de fixation d'une charge de compensation.

Selon une caractéristique particulière de ce mode de réalisation, lesdits moyens de fixation d'une charge de compensation sont positionnés au niveau d'un effecteur de longueur variable.

Dans un mode de réalisation particulier, au moins un des segments dudit deuxième bras articulé comprend un poids mobile le long dudit segment.

Les différents modes de réalisation mentionnés ci-dessus sont combinables entre eux pour la mise en œuvre de l'invention.

### Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
[Fig 1] présente un schéma simplifié d'un dispositif de manipulation selon l'art antérieur ;
[Fig 2] présente un schéma simplifié d'un exemple de dispositif de manipulation, dans un mode de réalisation particulier de la technique proposée ;
[Fig 3a] présente un schéma simplifié d'un autre exemple de dispositif de manipulation, dans un mode de réalisation particulier de la technique proposée ;
[Fig 3b] présente un schéma simplifié d'un autre exemple de dispositif de manipulation, dans un mode de réalisation particulier de la technique proposée ;
[Fig 3c] présente un schéma simplifié d'un autre exemple de dispositif de manipulation, dans un mode de réalisation particulier de la technique proposée ;
[Fig 4a] présente un schéma simplifié d'un autre exemple de dispositif de manipulation, dans un mode de réalisation particulier de la technique proposée ;
[Fig 4b] présente un autre schéma simplifié du dispositif de manipulation illustré en figure 4a, dans un mode de réalisation particulier de la technique proposée.

### Description détaillée de l'invention

La technique proposée permet de remédier à certains des inconvénients précités.

La technique proposée se rapporte plus particulièrement à un dispositif de manipulation de charge de structure simple et robuste, pouvant être mis en œuvre de manière purement mécanique dans au moins un mode de réalisation, et adapté pour être utilisé dans des environnements complexes (par exemple en extérieur, dans des conditions d'humidité ou de de température difficiles, ou encore dans des milieux particulièrement poussiéreux). À titre illustratif et non limitatif, le dispositif de manipulation proposé est par exemple particulièrement adapté pour être utilisé dans le secteur du bâtiment, pour des activités telles que la manipulation et la pose de plaques de plâtres, de menuiseries intérieures ou extérieures, etc.

Sur toutes les figures du présent document, les éléments de nature similaire sont désignés par une même référence numérique.

Un dispositif de manipulation de charge selon la présente technique est illustré en relation avec la **figure 2****,** dans un mode de réalisation particulier. Un tel dispositif de manipulation DM comprend deux bras articulés BA1 et BA2 s'étendant de part et d'autre d'une base B, i.e. dans des directions diamétralement opposées vis-à-vis de la base B. Selon les cas d'utilisation, la base B peut prendre la forme d'un support de fixation du dispositif de manipulation au bâti, ou encore d'une plate-forme mobile (par exemple montée sur roulettes) permettant de faciliter le déplacement du dispositif de manipulation. Le premier bras articulé BA1 comprend, à son extrémité libre, un effecteur comprenant des moyens de fixation (non représentés sur la figure 2) d'une charge CU à manipuler. Chacun des deux bras articulés BA1 et BA2 est formé d'une succession de segments reliés par des articulations (dans une configuration de bras articulés de type « sériel »).

Selon le principe général de la technique proposée, les deux bras articulés BA1 et BA2 sont par ailleurs de structures similaires, en ce qu'ils comprennent le même nombre de segments, et en ce que des segments de même position dans chacun des deux bras sont reliés au segment précédent ou à la base B par un même type d'articulation. Par position d'un segment au sein d'un bras articulé, on entend dans le présent document le rang de ce segment au sein du bras articulé considéré, en comptant à partir de la base du dispositif de manipulation. Il convient toutefois de noter que, dans le cadre de la présente technique, les différents segments des bras articulés BA1 et BA2, et en particulier les segments de même position dans chacun des deux bras, ne sont pas nécessairement formés dans un même matériau.

Ainsi, dans l'exemple du dispositif de manipulation DM illustré en figure 2, les bras articulés BA1 et BA2 comprennent chacun trois segments (segments S11, S12 et S13 pour le bras articulé BA1, segments S21, S22 et S23 pour le bras articulé BA2) et trois articulations (articulations A11, A12 et A13 pour le bras articulé BA1, articulations A21, A22 et A23 pour le bras articulé BA2), et l'articulation A13 reliant les segments en deuxième (S12) et troisième (S13) positions du premier bras articulé BA1 est de même type que l'articulation A23 reliant les segments en deuxième (S22) et troisième positions (S23) du deuxième bras articulé BA2. Un tel exemple est bien entendu non limitatif, et les bras articulés d'un dispositif de manipulation selon la technique proposée peuvent comprendre deux ou plus de trois segments. Comme illustré sur la figure 2, les deux bras articulés sont par ailleurs généralement configurés pour pouvoir pivoter simultanément autour de la base B - et plus particulièrement autour d'un axe de support de ces deux bras (représenté en pointillé sur les figures) - la rotation d'un des bras d'un côté de la base entrainant une rotation similaire de l'autre bras de l'autre côté de la base de sorte que les deux bras s'étendent dans des directions sensiblement diamétralement opposées vis-à-vis de la base B lorsque le dispositif de manipulation est utilisé.

Selon le principe général de la technique proposée, chaque segment du deuxième bras articulé BA2 est de longueur plus courte et de masse plus importante, dans des mêmes proportions, que le segment de même position du premier bras articulé BA1. En d'autres termes, la longueur et la masse d'un segment quelconque du deuxième bras articulé BA2 sont dimensionnées pour que le produit masse-longueur de ce segment soit sensiblement équivalent au produit masse-longueur du segment correspondant (i.e. de même position) du premier bras articulé BA1. On définit ainsi une relation d'association entre les segments de mêmes positions dans chacun des deux bras articulés, le produit longueur-masse de deux segments associés étant sensiblement équivalent.

Selon le principe général de la technique proposée, le dispositif de manipulation comprend également des moyens de transmission de mouvements (non représentés sur la figure 2) entre segments associés, ces moyens de transmission étant configurés pour qu'un mouvement d'un segment d'un des deux bras articulés entraine un mouvement de même amplitude du segment associé de l'autre bras articulé. Ces moyens de transmissions comprennent par exemple des moyens de transmission par engrenages, par courroies, par chaines, par câbles, selon le principe de tenségrité, ou encore une combinaison de ces différents moyens.

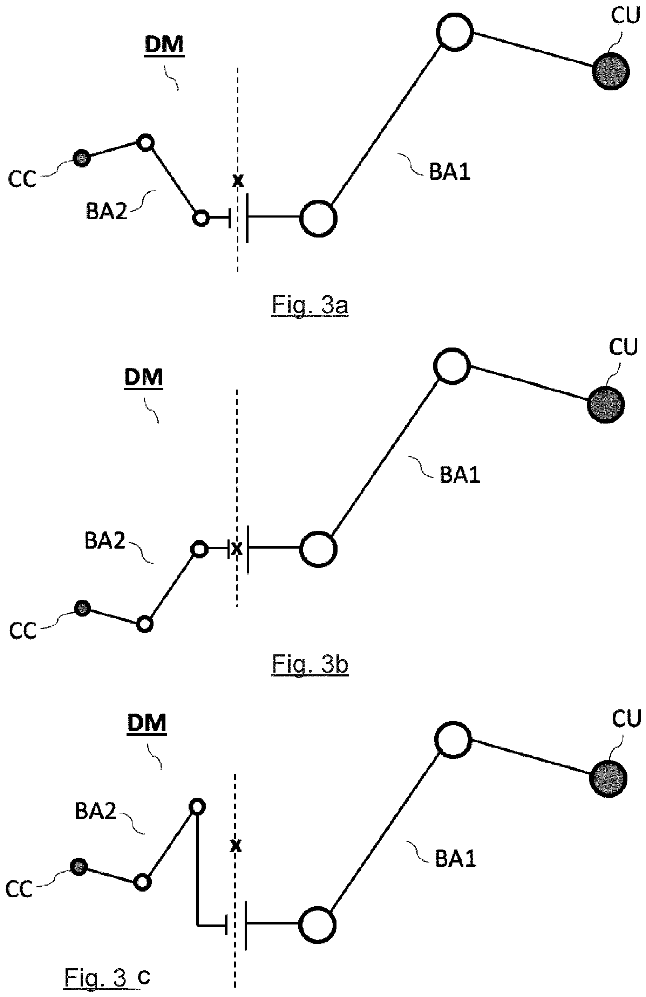

En d'autres termes, de manière simplifiée, le deuxième bras articulé s'apparente à une version en taille réduite, mais plus lourde, du premier bras articulé, et les positions de ces deux bras sont synchronisées de manière à obtenir, selon un principe d'équilibrage des masses, une compensation totale de la masse du premier bras articulé quelle que soit sa position dans l'espace de travail. Pour assurer cette compensation, les deux bras articulés sont disposés de part et d'autre d'un axe ou d'un point de support du dispositif de manipulation, et des moyens de transmission mécaniques sont prévus de sorte que tout mouvement d'un segment d'un des deux bras articulés entraine un mouvement correspondant de compensation du segment de même position dans l'autre bras articulé, de même amplitude. À tout instant, la configuration du deuxième bras articulé (définie par les positions respectives, i.e. les relations angulaires, des segments qui le composent) correspond donc sensiblement, dans une certaine mesure, au résultat de l'application au premier bras articulé de la composée d'une symétrie (qui peut être axiale ou centrale) et d'une homothétie. À ce titre, les **figures 3a** , **3b** et **3c** présentent d'autres exemples de configurations possibles pour la mise en œuvre d'un dispositif de manipulation selon la technique proposée, en complément de celle illustrée en relation avec la figure 2, qui permettent toutes une compensation totale de gravité du premier bras articulé (qui peut être qualifié de bras « manipulateur ») par un deuxième bras articulé (qui peut être qualifié de bras « compensateur »), i.e. l'obtention, à l'équilibre, pour le dispositif de manipulation, d'un centre de gravité qui reste positionné sur l'axe de support de ce dispositif. Parmi ces différentes configurations, on distingue notamment des exemples de configurations de type « symétrie axiale » (cas des figures 2 et 3a, dans lesquels les moyens de transmission de mouvement entre segments associés sont configurés pour qu'un mouvement de rotation d'un segment d'un des deux bras articulés entraine un mouvement de rotation de même amplitude mais de sens de rotation opposé du segment associé de l'autre bras articulé) et des exemples de configurations de type « symétrie centrale » (cas des figures 3b et 3c, dans lesquels les moyens de transmission de mouvement entre segments associés sont configurés pour qu'un mouvement de rotation d'un segment d'un des deux bras articulés entraine un mouvement de rotation de même amplitude et de même sens de rotation du segment associé de l'autre bras articulé).

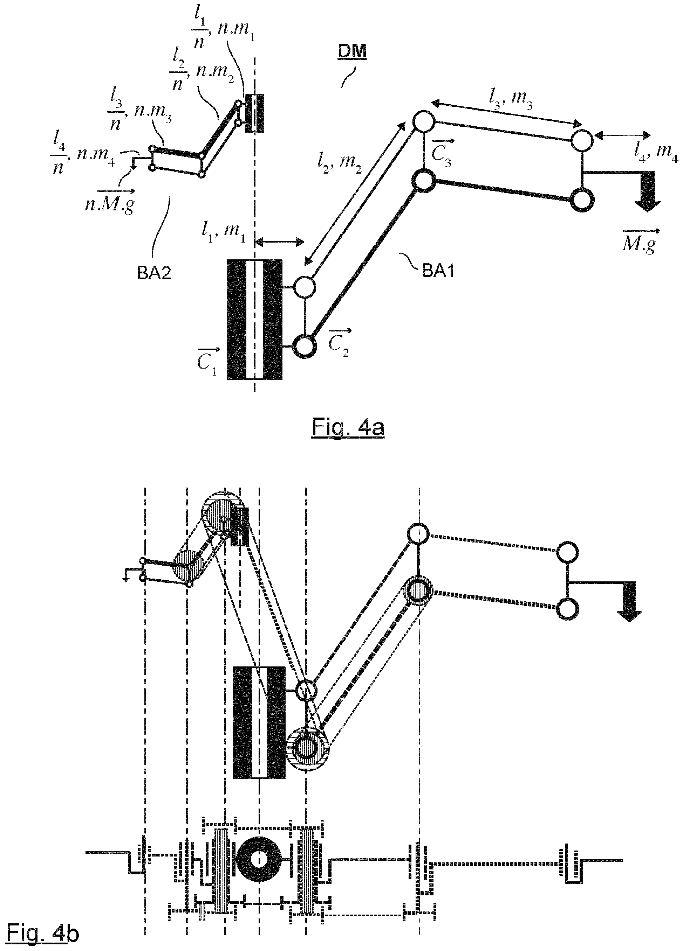

Dans un mode de réalisation particulier de la technique proposée, le deuxième bras articulé BA2 comprend également, à son extrémité libre, au niveau d'un effecteur, des moyens de fixation d'une charge. Ainsi, la charge utile CU (i.e. la charge à manipuler) portée par le premier bras articulé BA1 peut également être compensée au moins en partie par une charge de compensation CC fixée à l'extrémité du deuxième bras articulé BA2. De cette manière, il est par exemple possible d'obtenir une compensation totale de l'ensemble formé par le premier bras articulé BA1 et par la charge utile CU, lorsque cette charge utile CU est solidarisée de manière fixe à l'extrémité libre (i.e. au niveau de l'effecteur) du premier bras articulé BA1. Dans le cas où la charge utile CU est mobile par rapport à cet effecteur, une compensation partielle mais néanmoins importante, de cet ensemble peut également être obtenue lorsque la charge utile est mise en mouvement. En particulier, la charge de compensation CC peut être choisie par l'utilisateur parmi différentes charges de masses variées, en fonction de la masse de la charge utile CU à déplacer, comme présenté ci-après, en relation avec la figure 4a.

La **figure 4a** présente un autre schéma simplifié d'un dispositif de manipulation dans une configuration proche de celle illustrée en relation avec la figure 2. Dans ce mode de réalisation particulier de la technique proposée, les différents segments du premier bras articulé BA1 et du deuxième bras articulé BA2 présentent une structure en parallélogramme déformable (mécanisme à quatre barres liées entre elles par des liaisons pivot), permettant de conserver une orientation constante (par exemple une orientation horizontale) des effecteurs situés aux extrémités libres respectives des deux bras articulés, quelle que soit la position de ces bras. Un tel exemple est donné à titre purement illustratif et non limitatif, étant entendu que d'autres mécanismes de conservation de l'orientation des effecteurs, ne reposant pas sur une structure des segments en parallélogramme déformable, peuvent également être mis en œuvre dans le cadre d'autres modes de réalisation de la présente technique (par exemple, des solutions basées sur une exploitation des mesures délivrées par un ou plusieurs inclinomètres positionnés sur les bras articulés).

Sur la figure 4a sont également indiquées des exemples de relations entre longueurs et masses des segments associés des premier et deuxième bras articulés, permettant ainsi d'illustrer à nouveau le principe général de la technique proposée. Ainsi, dans cet exemple (avec *n* un réel supérieur à 1) :
- le premier segment du premier bras articulé BA1, de longueur *l₁* et de masse *m₁,* est associé au premier segment du deuxième bras articulé BA2, de longueur *l₁*/*n* et de masse *n.m₁ ;*
- le deuxième segment du premier bras articulé BA1, de longueur *l₂* et de masse *m₂*, est associé au deuxième segment du deuxième bras articulé BA2, de longueur *l₂*/*n* et de masse *n.m₂* ;
- le troisième segment du premier bras articulé BA1, de longueur *l₃* et de masse *m₃*, est associé au troisième segment du deuxième bras articulé BA2, de longueur *l₃*/*n* et de masse *n.m₃* ;
- l'effecteur du premier bras articulé BA1 (qui peut être assimilé à un quatrième segment du premier bras articulé BA1), de longueur *l₄* et de masse *m₄,* est associé à l'effecteur du deuxième bras articulé BA2 (qui peut être assimilé à un quatrième segment du deuxième bras articulé BA2), de longueur *l₄*/*n* et de masse *n.m₄.*

Les premier et deuxième bras articulés BA1 et BA2 sont donc équivalents du point du vue du produit masse-longueur, le deuxième bras articulé BA2 correspondant à une version réduite d'un rapport *n* du premier bras articulé BA1, mais n fois plus lourde.

Comme illustré par ailleurs en relation avec la **figure 4b****,** et conformément au principe général précédemment décrit, des moyens de transmission de mouvement entre segments associés sont également mise en œuvre de manière à ce que tout mouvement d'un segment d'un des deux bras articulés entraine un mouvement correspondant de même amplitude du segment associé de l'autre bras articulé. Ces moyens de transmissions de mouvement, non représentés sur la figure 4a, sont illustrés partiellement sur la figure 4b, dans un mode de réalisation particulier (dans une vue de face du dispositif de manipulation en partie haute de la figure 4b, et dans une vue de dessus en partie basse de la figure 4b). Plus particulièrement, dans cet exemple, la transmission de mouvement est assurée par un mécanisme de courroies (avec, sur la figure 4b, un code couleur vert pour représenter les moyens de transmission de mouvement entre les segments associés de deuxième position dans les bras BA1 et BA2, et un code couleur jaune pour représenter les moyens de transmission de mouvement entre les segments associés de troisième position dans les bras BA1 et BA2).

La compensation mutuelle des deux bras articulés est ainsi totale dans l'espace de travail.

Dans la situation, telle qu'illustrée en relation avec la figure 4a, où un opérateur souhaite utiliser le dispositif de manipulation DM pour soulever puis manipuler une charge utile de masse M, il lui suffit, une fois le premier bras articulé BA1 en position de prise de la charge utile et cette dernière fixée à l'effecteur à l'extrémité libre de ce bras manipulateur BA1, de fixer au niveau de l'effecteur situé à l'extrémité libre du deuxième bras articulé compensateur BA2 une charge de compensation de masse *n*.M (avec *n* le réel supérieur à 1 tel que défini précédemment). De cette manière, un équilibre est créé, avec une compensation totale non seulement du dispositif de manipulation mais également de la charge dans l'ensemble de l'espace de travail. L'opérateur peut alors manipuler facilement la charge utile saisie (i.e. la déplacer dans l'espace de travail), sans pour autant être privé totalement de la perception de certaines grandeurs physiques qui la caractérise telles que sa masse ou son inertie, contrairement aux dispositifs de manipulation selon l'art antérieur. En d'autres termes, la conception du dispositif de manipulation selon la présente technique repose sur une approche qui peut être qualifiée de « centrée humain », dans la mesure où ce dispositif offre à l'utilisateur la possibilité de « ressentir » aisément le comportement de la charge déplacée et faciliter ainsi son positionnement précis dans l'espace de travail. Selon une caractéristique particulière, l'opérateur a la possibilité de manipuler directement le deuxième bras articulé (i.e. le bras compensateur, de plus petite taille) pour contrôler le premier bras articulé (i.e. le bras manipulateur, de plus petite taille) et donc, *in fine,* le déplacement de la charge utile au sein de l'espace de travail.

Dans un mode de réalisation particulier, au moins un des segments du deuxième bras articulé comprend un poids mobile le long de l'axe de ce segment, qui peut par exemple être déplacé manuellement ou automatiquement au moyen d'un actionneur linéaire (e.g. pignon crémaillère, vis sans fin écrou, moteur linéaire) équipant le segment (la masse d'un tel poids étant considérée, dans le cadre du présent document, comme faisant partie de la masse globale du segment considéré). Le déplacement d'un tel poids le long d'un segment du deuxième bras articulé peut ainsi être utilisé pour rompre l'équilibre du dispositif de manipulation (via le déplacement résultant du centre de gravité du segment) et générer ainsi un déplacement de la charge utile portée par le premier bras articulé. Selon un même principe, le deuxième bras articulé peut également être équipé de moyens permettant, au niveau de l'effecteur situé à son extrémité libre, de rapprocher ou d'éloigner la charge de compensation de la base du dispositif de manipulation (ces moyens pouvant par exemple prendre la forme d'actionneurs linéaires de même type que ceux précédemment décrits, et permettant par exemple de faire varier la longueur de l'effecteur). Ainsi, en supposant par exemple que ces moyens soient utilisés, à partir d'une position d'équilibre, pour éloigner de la base la charge de compensation portée par le deuxième bras articulé, les couples générées du côté de ce deuxième bras articulé vont augmenter, entrainant un déséquilibre provoquant un déplacement vers le haut de la charge utile portée par le premier bras articulé. Les couples sur les autres segments du deuxième bras articulé étant également modifiés suite au déplacement de la charge de compensation, le déplacement vers le haut de la charge utile s'accompagne d'un déplacement horizontal qui peut être considéré comme un mouvement parasitaire si l'objectif recherché est un déplacement purement vertical de la charge utile. Toutefois, la connaissance de l'ensemble des masses en jeu permet de mettre en œuvre des moyens de compensation permettant d'éliminer cette déviation horizontale parasitaire. De la même manière, le dispositif de manipulation selon la technique proposée permet de créer, suivant le même principe, un déséquilibre induisant un déplacement horizontal de la charge utile.

Le principe général décrit dans le présent document peut toutefois également être mis en œuvre, selon l'invention, dans le cadre de solutions actives incluant des éléments motorisés permettant de faciliter l'utilisation du dispositif de manipulation. Dans ce cadre, un dispositif de manipulation selon la technique proposée, i.e. à deux bras articulés, conserve un intérêt vis-à-vis des dispositifs de manipulation existants tel que celui décrit en relation avec la figure 1, en ce qu'il permet de minimiser la quantité d'énergie à fournir pour obtenir les mêmes effets (i.e. les mêmes mouvements, à charge utile équivalente) qu'un dispositif de l'art antérieur. Dans de tels modes de réalisation, les moyens de transmission de mouvement entre segments associés des deux bras articulés sont par exemple configurés pour passer ou s'étendre au moins en partie au niveau de la base du dispositif de manipulation, et des moyens de motorisation (ou à tout le moins des aides motorisées) de ces moyens de transmission de mouvement peuvent également être prévus au niveau de cette base, permettant de mettre en œuvre une assistance au déplacement de la charge à manipuler. Selon une caractéristique particulière, ces moyens de motorisations comprennent notamment des moteurs éventuellement réversibles, qui peuvent être utilisés pour accélérer ou freiner le déplacement de la charge utile, et être associés à des moyens de récupération d'énergie afin de diminuer encore la consommation globale du système.

## Revendications

1. Dispositif de manipulation (DM) d'une charge, comprenant un premier bras articulé (BA1) s'étendant d'une base (B) dudit dispositif jusqu'à une extrémité libre dudit premier bras articulé comprenant des moyens de fixation de ladite charge, ledit premier bras articulé étant formé d'une succession de segments (S11, S12, S13) reliés par des articulations (A11, A12, A13), ledit dispositif comprenant :
- un deuxième bras articulé (BA2) formé d'une succession d'un même nombre de segments (S21, S22, S23) que ledit premier bras articulé, reliés entre eux par un même type d'articulations (A21, A22, A23) que celles dudit premier bras articulé, lesdits premier et deuxième bras articulés s'étendant de part et d'autre de ladite base, chaque segment dudit deuxième bras articulé étant de longueur plus courte et de masse plus importante qu'un segment de même position, dit segment associé, dudit premier bras articulé, lesdites longueur et masse étant dimensionnées pour que le produit masse-longueur soit sensiblement équivalent pour deux segments associés ;
- des moyens de transmission de mouvements entre segments associés, lesdits moyens de transmission étant configurés pour qu'un mouvement d'un segment d'un des deux bras articulés entraine un mouvement de même amplitude du segment associé de l'autre bras articulé, lesdits moyens de transmission s'étendant au moins en partie au niveau de ladite base,
ledit dispositif étant **caractérisé en ce que** ladite base comprend des moyens de motorisation desdits moyens de transmission.

2. Dispositif selon la revendication 1, **caractérisé en ce que** les segments dudit premier bras articulé et/ou dudit deuxième bras articulés présentent une structure en parallélogramme déformable.

3. Dispositif selon la revendication 1, **caractérisé en ce que** lesdits moyens de transmission appartiennent au groupe comprenant des moyens de transmission par engrenages, par courroies, et/ou par chaines.

4. Dispositif selon la revendication 1, **caractérisé en ce que** ledit deuxième bras articulé comprend, à son extrémité libre, des moyens de fixation d'une charge de compensation.

5. Dispositif selon la revendication 4, **caractérisé en ce que** lesdits moyens de fixation d'une charge de compensation sont positionnés au niveau d'un effecteur de longueur variable.

6. Dispositif selon la revendication 1, **caractérisé en ce qu'**au moins un des segments dudit deuxième bras articulé comprend un poids mobile le long dudit segment.

## Patentansprüche

1. Vorrichtung zum Handhaben (DM) einer Last, umfassend einen ersten Gelenkarm (BA1), der sich von einer Basis (B) der Vorrichtung bis zu einem freien Ende des ersten Gelenkarms erstreckt, umfassend Mittel zum Befestigen der Last, wobei der erste Gelenkarm aus einer Abfolge von Segmenten (S11, S12, S13) gebildet ist, die durch Gelenke (A11, A12, A13) verbunden sind, wobei die Vorrichtung umfasst:
- einen zweiten Gelenkarm (BA2), der aus einer Abfolge derselben Anzahl von Segmenten (S21, S22, S23) wie der erste Gelenkarm gebildet ist, die durch Gelenke (A21, A22, A23) derselben Art wie die des ersten Gelenkarms miteinander verbunden sind, wobei sich der erste und der zweite Gelenkarm zu beiden Seiten der Basis erstrecken, wobei jedes Segment des zweiten Gelenkarms kürzer und schwerer ist als ein Segment derselben Position, das sogenannte zugehörige Segment, des ersten Gelenkarms, wobei die Länge und die Masse so dimensioniert sind, dass das Produkt aus Masse und Länge für zwei zugehörige Segmente im Wesentlichen gleich ist;
- Mittel zur Übertragung von Bewegungen zwischen zugehörigen Segmenten, wobei die Übertragungsmittel so konfiguriert sind, dass eine Bewegung eines Segments eines der beiden Gelenkarme eine Bewegung gleicher Amplitude des zugehörigen Segments des anderen Gelenkarms bewirkt, wobei sich die Übertragungsmittel mindestens teilweise auf Höhe der Basis erstrecken, wobei die Vorrichtung **dadurch gekennzeichnet ist, dass** die Basis Mittel zum motorischen Antreiben der Übertragungsmittel umfasst.

2. Vorrichtung nach Anspruch 1, **dadurch gekennzeichnet, dass** die Segmente des ersten Gelenkarms und/oder des zweiten Gelenkarms eine verformbare Parallelogrammstruktur aufweisen.

3. Vorrichtung nach Anspruch 1, **dadurch gekennzeichnet, dass** die genannten Übertragungsmittel zu der Gruppe gehören, die Übertragungsmittel mittels Zahnrädern, Riemen und/oder Ketten umfasst.

4. Vorrichtung nach Anspruch 1, **dadurch gekennzeichnet, dass** der zweite Gelenkarm an seinem freien Ende Mittel zum Befestigen einer Ausgleichslast umfasst.

5. Vorrichtung nach Anspruch 4, **dadurch gekennzeichnet, dass** die Befestigungsmittel für eine Ausgleichslast an einem Effektor mit variabler Länge positioniert sind.

6. Vorrichtung nach Anspruch 1, **dadurch gekennzeichnet, dass** mindestens eines der Segmente des zweiten Gelenkarms ein entlang des Segments bewegliches Gewicht umfasst.

## Claims

1. A handling device (DM) for handling a load, including a first articulated arm (BA1) extending from a base (B) of said device to a free end of said first articulated arm that includes attachment means for attaching said load, wherein said first articulated arm is formed by a succession of segments (S11, S12, S13) connected by articulated joints (A11, A12, A13), wherein said device includes
- a second articulated arm (BA2) formed by a succession of a same number of segments (S21, S22, S23) as said first articulated arm, which are connected to each other by a same type of articulated joints (A21, A22, A23) as those of said first articulated arm, wherein said first and second articulated arms extend on either side of said base, wherein each segment of said second articulated arm is shorter in length and greater in mass than a segment in the same position, called the associated segment, of said first articulated arm, wherein the dimensions of said length and mass are calculated so that the mass-length product is substantially equivalent for two associated segments;
- transmission means for transmitting movements between associated segments, wherein said transmission means are configured so that a movement of a segment of one of the two articulated arms causes a movement of the same magnitude of the associated segment of the other articulated arm, wherein said transmission means extend at least partly at said base,
wherein said device is **characterised in that** said base includes motorisation means for motorising said transmission means.

2. A device according to claim 1, **characterised in that** the segments of said first articulated arm and/or of said second articulated arm have a structure with the form of a deformable parallelogram.

3. A device according to claim 1, **characterised in that** said transmission means belong to the group including transmission means via gears, belts and/or chains.

4. A device according to claim 1, **characterised in that** said second articulated arm includes, at its free end, attachment means for attaching a counterload.

5. A device according to claim 4, **characterised in that** said attachment means for attaching a counterload are positioned at an effector of a variable length.

6. A device according to claim 1, **characterised in that** at least one of the segments of said second articulated arm includes a weight that is movable along said segment.
